# EUROPEAN PATENT SPECIFICATION

(11) **EP 0 596 339 B1**
(45) Date of publication and mention of the grant of the patent: **13.01.1999**
(21) Application number: 93117086.4
(22) Date of filing: 21.10.1993
(51) Int. Cl.: G11B 7/24, G11B 11/10

(54) **Optical recording medium**
Optisches Aufzeichnungsmedium
Support d'enregistrement optique

(30) Priority: 02.11.1992 JP 294318/92
(43) Date of publication of application: 11.05.1994
(73) Proprietor: PIONEER ELECTRONIC CORPORATION, Meguro-ku Tokyo (JP)
(72) Inventor: Takamasa, Yoshikawa, c/o Sougoukenkyusho, Tsurugashima, Saitama-ken (JP)
(74) Representative: Bohnenberger, Johannes, Dr.

(56) References cited:
- EP-A- 376 700
- EP-A- 0 211 435
- EP-A- 0 239 390
- EP-A- 0 449 121
- US-A- 4 801 499
- US-A- 4 860 273

## Description

### BACKGROUND OF THE INVENTION

The present invention relates to an optical recording medium, and more particularly to a medium where the recording density thereof is increased.

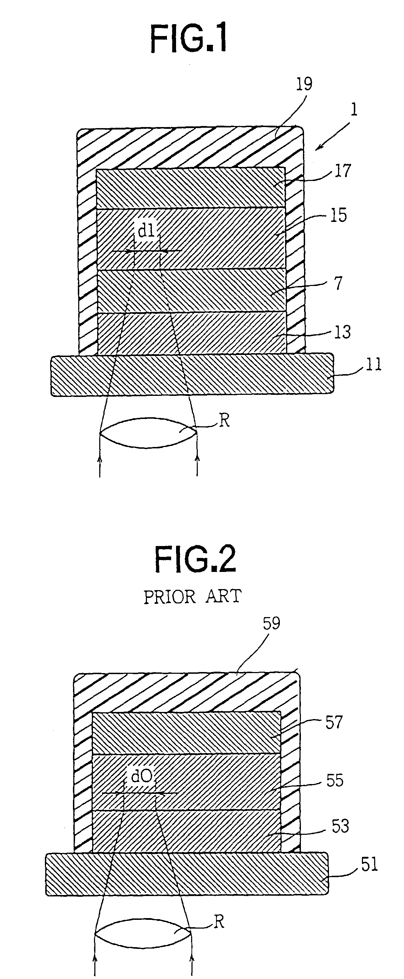

Referring to Fig. 2, a conventional three-layered optical recording medium has a substrate 51, first dielectric film 53 coated on the substrate 51, recording film 55 formed on the film 53, and a second dielectric film 57. The laminated films are covered with an organic protection film 59 as appropriate.

In a magneto-optical recording method, the recording film 55 is irradiated with a laser beam through an objective R, passing through the substrate 55 and the first dielectric film 53. The beam heats the recording film 55, thereby reversing the direction of the magnetic domain to form pits on the film 55. In a phase change recording method, when a laser beam is applied to the recording film 55, there occurs a change of phase between crystalline structure and amorphous structure. Thus pits are formed.

In such recording methods, the diameter of the pits corresponds to a minimum diameter d0 of a beam spot formed on the recording film by the laser beam which is constricted by the objective R. Hence, the recording density of the recording medium cannot be increased, exceeding a value determined by the minimum diameter of the beam.

### SUMMARY OF THE INVENTION

An object of the present invention is to provide an optical recording medium where a smaller pit than a spot of a laser beam can be formed on the recording film so as to increase the density of the pits.

The present invention provides an optical recording medium according to claim 1.

When the beam is radiated, the diameter of the beam is decreased when passing through the light-to-heat converting film so that a smaller beam spot than a focused spot on the light-to-heat converting film is formed by the beam on the recording film. Ep 211 435 discloses a recording medium comprising an intermediate layer which can be made of Zirconium-carbide. This document serves as a basis for the two-part form. US 4860273 discloses a recording medium comprising a dye layer serving to convert light into heat.

Other objects and features of this invention will become understood from the following description with reference to the accompanying drawings.

### BRIEF DESCRIPTION OF DRAWINGS

Fig. 1 is a sectional view of a laminated recording medium according to the present invention;
Fig. 2 is a sectional view of a conventional laminated recording medium;
Fig. 3a is an illustration showing pits formed on the conventional recording medium as a comparative example; and
Fig. 3b is a similar illustration showing pits formed on the surface of the recording medium of the present invention.

### DETAILED DESCRIPTION OF THE PREFERRED EMBODIMENT

Referring to Fig. 1, an optical recording medium 1 of the present invention has a light-transmissible disc substrate 11, made of such material as glass, acrylic resin, polycarbonate resin, and amorphous polyolefin. The thickness of the substrate is about 1.0 to 1.5 mm.

On the substrate is formed a first dielectric film 13 of dielectric material such as zinc sulfide (ZnS), silicon nitride (SiN), aluminum nitride (AlN) and zinc oxide (ZnO). The thickness of the film 13 is about 10 to 150 nm. The dielectric film 13 is an enhancement film, and hence not essential to the recording medium of the present invention. Thus, the dielectric film 13 is provided as appropriate. The invention is however restricted to the case where the dielectric is not provided.

A light-to-heat converting film (hereinafter called converting film) 7 is formed on the dielectric film by such methods as sputtering, ion plating and deposition, which are carried out in vacuum. The material of the converting film 7 is a carbide of transition metals belonging to group IV, for example, zirconium carbide (ZnC), titanium carbide (TiC), and hafnium carbide (HfC). Each of these materials, zirconium carbide in particular, converts the light, the wave length of which is in the range of 400 to 830 nm, into heat at a ratio more than 50 %. Thus, the laser beam focused on surface of the converting film 7 is constricted during passing therethrough to form a smaller beam spot on the surface of a recording film 15, as shown in the figure.

The converting film 7 usually comprises a single layer of the carbide. Alternatively, several layers of the same compound, or of various compounds may be laminated instead.

The thickness of the film is in the range of 9 to 300 nm, and preferably in the range of 10 to 100 nm. More particularly, when the thickness exceeds 300 nm, data recorded on the medium cannot be reproduced. If the thickness is less than 5 nm, the conversion effect is insufficient.

The recording film 15 capable of forming pits on the surface thereof by magneto-optical effect, phase change effect, or by color change is formed on the converting film 7. If the optical recording medium 1 is magneto-optical, the recording film 15 is an alloy of rare earth metals and transition metals, such as a terbium-iron-cobalt (TbFeCo) compound, and an alloy of gadolinium-iron-cobalt compound and terbium-iron compound (GdFeCo/TbFe). The film 15 may also be a multilayered film comprising layers of rare metal, such as platinum and palladium, and layers of cobalt (Pt/Co, Pd/Co).

In the case of a phase change medium, the materials such as germanium-antimony-tellurium (GeSbTe) compounds, and indium-antimony-tellurium (InSbTe) compounds are appropriate. For organic medium, organic coloring matter such as tellurides and cyanine dye are used.

The thickness of the recording film 15 is dependent on the material, but a preferable thickness generally falls in a range of 10 to 300 nm.

A second dielectric film 17 which consists of the similar material as the first dielectric film 13, such as zinc sulfide, silicon nitride, aluminum nitride and zinc oxide, is formed on the recording film 15. The thickness of the second dielectric film 17 is about 10 to 150 nm. The second dielectric film is adapted to protect the recording film 15, and hence provided only as a preferred example.

An organic protection film 19 is disposed on the second dielectric film 17 to cover not only the upper surface of the dielectric film 17 but also the side edges of the laminated films. As a result, the recording film 15 is prevented from deteriorating at the edges thereof. The material of the organic protection film 19 is a ultraviolet hardenining material, made of resin such as epoxy resin, urethane resin and acrylic resin. The protection film 19 is usually formed by a spin coat method and has a thickness of about 10 to 500 µm.

In operation, a laser beam for recording information is focused by the objective R and transmitted to the recording film 15, passing through the substrate 11, first dielectric film 13, and converting film 7. As the beam passes through the converting film 7, a part of the beam is converted into heat. Thus, a beam spot having a small diameter dl is formed on the recording film.

The optical recording medium of the present invention will be described in detail with comparison to a conventional medium. The following example is not part of the invention

### EXAMPLE

An example of an optical recording medium which was produced in the following manner. The glass disc substrate 11 having a diameter of 13 cm, a thickness of 1.2 mm, and a spiral pre-groove at a track pitch of 0.8 µm on the surface thereof was prepared. The first dielectric film 13 of zinc sulfide, the thickness of which is 40 nm, was formed on the glass substrate 11 by sputtering. The converting film 7 of zinc carbide, having a thickness of 60 nm was formed on the first dielectric film 13 also by sputtering. A terbium-iron-cobalt compound (Tb₁₈(Fe₉₀Co₁₀)₈₂) was sputtered on the film 13 to form a magneto-optical recording film 15 having a thickness of 100 nm.

The second dielectric film 17 of zinc sulfide having a thickness of 100 nm was formed on the recording film 15 by sputtering. Finally, the organic protection film 19 having a thickness of about 20 µm was formed by the spin coating method, covering the layers of films at the edges.

### COMPARATIVE EXAMPLE

A comparative example using a conventional magneto-optical recording medium was produced in roughly the same manner as the hereinbefore described example of the present invention. The only difference between the samples was that the comparative sample is obviated of the converting film 7.

### RECORDING CONDITION

Information was recorded on each example under the following conditions, thereby forming a plurality of pits on the respective recording films.
Linear velocity: 10 m/sec
Recording frequency: 10 MHz
Power of laser beam: 6.5 mW
Intensity of external magnetic field: 300 Oe
The pits on the medium were photographed using an optical microscope, the magnifying power of which is 7500.

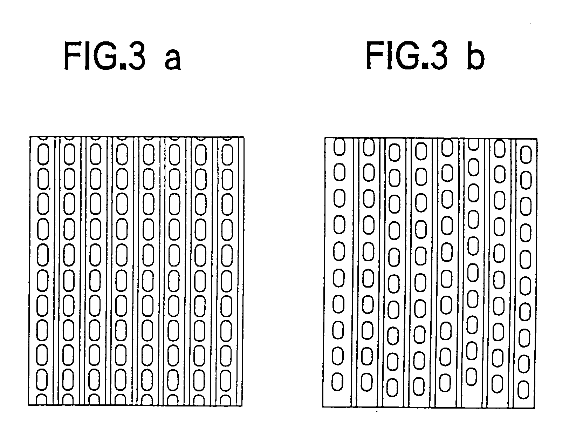

Referring to Figs. 3a and 3b, which show illustrations of the photographs, the size of the pits formed on the medium of the present invention (Fig. 3b) is about four fifths of the pits on the comparative example (Fig. 3a). Hence an increased number of pits can be formed on the medium of the present invention.

The same result was obtained when titanium carbide and hafnium carbide were used as the light-to-heat converting film.

In accordance with the present invention, there is provided an optical recording medium wherein a light-to-heat converting film is disposed between the substrate and the recording film. The light-to-heat converting film renders the diameter of the beam passing therethrough smaller, so that smaller pits are formed on the recording film. As a result, the recording density of the recording medium becomes higher.

While the presently preferred embodiment of the present invention has been shown and described, it is to be understood that this disclosure is for the purpose of illustration and that various changes and modifications may be made without departing from the scope of the invention as set forth in the appended claims.

## Claims

1. An optical recording medium comprising:
a substrate (11), an intermediate film (7) disposed on the substrate (11), and a recording film (15) disposed on the intermediate film (7);
characterized in that
the intermediate film (7) is composed only of a carbide selected from the group consisting of zirconium carbide, titanium carbide and hafnium carbide, and has a thickness in the range of 10 to 100 nm, so as to reduce the diameter (dl) of a laser beam passing therethrough by conversion of light to heat.

2. An optical recording medium of Claim 1, wherein the conversion of light to heat by the intermediate film (7) is at a ratio of more than 50% in the laser light wavelength range of 400 to 830 nm.

## Patentansprüche

1. Optisches Aufzeichnungsmedium, das folgendes aufweist:
ein Substrat (11), eine auf dem Substrat (11) angeordnete Zwischenschicht (7) und eine auf der Zwischenschicht (7) angeordnete Aufzeichnungsschicht (15);
dadurch gekennzeichnet, daß
die Zwischenschicht (7) nur aus einem Carbid besteht, das aus der Gruppe ausgewählt ist, die aus Zirconiumcarbid, Titancarbid und Hafniumcarbid besteht, und eine Dicke in dem Bereich von 10 bis 100 nm hat, um den Durchmesser (dl) eines hindurchgehenden Laserstrahls durch Umwandlung von Licht in Wärme zu verkleinern.

2. Optisches Aufzeichnungsmedium nach Anspruch 1, wobei die Umwandlung von Licht in Wärme durch die Zwischenschicht (7) in einem Verhältnis von mehr als 50 % in dem Laserlichtwellenlängenbereich von 400 bis 830 nm ist.

## Revendications

1. Moyen d'enregistrement optique comprenant :
un substrat (11), un film intermédiaire (7) disposé sur le substrat (11), et un film d'enregistrement (15) disposé sur le film intermédiaire (7),
caractérisé en ce que
le film intermédiaire (7) est composé seulement d'un carbure choisi dans le groupe constitué du carbure de zirconium, du carbure de titane et du carbure d'hafnium, et a une épaisseur dans la gamme de 10 à 100 nm, afin de réduire le diamètre (dl) d'un rayon laser passant à travers par conversion de lumière en chaleur.

2. Moyen d'enregistrement optique selon la revendication 1, dans lequel la conversion de lumière en chaleur par le film intermédiaire (7) est dans un rapport de plus de 50 % dans la gamme de longueur d'ondes de la lumière de laser de 400 à 830 nm.
